**Europäisches Patentamt**

(19) **European Patent Office**

**Office européen des brevets**

(11) Publication number: **0 189 013**

**B1**

(12) **EUROPEAN PATENT SPECIFICATION**

(45) Date of publication of patent specification: **17.08.88**

(21) Application number: **85850407.9**

(22) Date of filing: **20.12.85**

(51) Int. Cl.⁴: **B 60 K 5/02, B 62 D 5/07**

(54) **Power transmission arrangement in a tractor.**

(30) Priority: **09.01.85 FI 850108**

(43) Date of publication of application:
**30.07.86 Bulletin 86/31**

(45) Publication of the grant of the patent:
**17.08.88 Bulletin 88/33**

(84) Designated Contracting States:
**AT BE CH DE FR GB IT LI LU NL SE**

(56) References cited:
**WO-A-80/01479**
**FR-A-1 257 539**
**GB-A-1 326 989**
**US-A-2 857 009**

(73) Proprietor: **Valmet Oy**
**Punanotkonkatu 2**
**SF-00130 Helsinki 13 (FI)**

(72) Inventor: **Niskanen, Hannu**
**Tavintie 3 G 66**
**SF-40400 Jyväskylä (FI)**

(74) Representative: **Rostovanyi, Peter et al**
**AWAPATENT AB Box 5117**
**S-200 71 Malmö (SE)**

Courier Press, Leamington Spa, England.

## Description

Power transmission arrangement in a tractor

The invention is concerned with a power transmission arrangement in a tractor, in particular in a four-wheel-drive tractor, in which the power is transmitted from the tractor gearbox or from a separate power take-off gearbox to the differential gear of the driving front axle by means of a cardan shaft or a corresponding power transmission member and in which tractor, at its front end, a power takeoff shaft is provided, by means of which the power can be transmitted from the engine crankshaft to necessary equipment from the front end of the tractor.

In conventional four-wheel-drive tractors the power transmission arrangement is, as a rule, such that the power is transmitted from the engine, placed in the front part of the tractor, through the drive clutch and a cardan shaft or clutch shaft to the gearbox, placed in the rear part of the tractor, which said gearbox may be built in the same housing with the drive gear of the rear wheels. The gearbox may be provided with a clutch and with a power take-off for the four-wheel drive, or with a separate take-off box, from which the power is transmitted through a cardan shaft to the drive gear of the front axle. The front axle is normally a swing axle, which is mounted on the tractor frame or on some other carrying frame part. Normally, the front axle comprises a rigid, hollow axle housing, in which the drive gear is also installed.

It is a general drawback of a swing axle that the allowance for tilting cannot be made very large, because, on tilting, the axle readily reaches contact with the frame constructions of the tractor. Moreover, in particular in four-wheel-drive tractors, in which usually rather large front wheels are used, on tilting of the axle the wheels may reach contact with the engine housing. When the axle is tilted, the wheels are also tilted, whereby their grip and tractive capacity are reduced essentially.

In order to improve the traction and the grip, it is possible to use a differential lock in connection with the differential of the front axle, which said lock is commonly a so-called "limited slip" type friction lock. Generally speaking, a hydraulically or electrically operating positive lock cannot be used in the front axle, because in rough terrain the hoses and wires tend to adhere to unevennesses in the terrain and can be broken. Moreover, hydraulically operating locks almost always involve a little leakage of oil, whereby the leakage of oil would end up in the axle housing and, in the course of time, might damage the axle seals.

In tractors in which a power take-off possibility is also provided at the front of the tractor, the arrangement is usually such that the power is taken-off, at the front end of the crankshaft by means of a cardan, shaft to a separate reduction gear of the power take-off, which is provided with a power take-off shaft. The reduction gear of the power take-off is normally fitted in a separate housing, which also contains the clutch of the power take-off. As a rule, the coupling used is a dry friction clutch, even though a so-called oil bath clutch may also be used. However, one of the drawbacks of such a separate power take-off gearbox is that it constitutes an oil space separate from the other constructions of the tractor. This again results in additional servicing points on the tractor and one more possibility of leakage of oil.

The object of the present invention is to provide a power transmission arrangement for a tractor which does not involve the drawbacks described above. To this end, a power transmission arrangement in accordance with the present invention is characterised by the features specified in the characterising part of claim 1.

By means of the present invention, several advantages are obtained as compared with the prior-art solutions. Of the advantages may be mentioned, e.g. that the actuating means are fitted in the same oil space, whereby there are fewer possible leakage points. Moreover, the same engine lubricant oil can be used as the lubricant and drive medium for the actuating means, whereby the serviceability of the tractor is improved essentially. Moreover, when the solution in accordance with the invention is applied, conventional suspension members known from the automobile technology can be used for the suspension of the front wheels, whereby, e.g. during driving in rough terrain, the position and the angles of tilting of the wheels remain all the time as desired, which improves the grip of the wheels and improves the tractive capacity of the tractor. Also, such a solution provides a possibility to arrange the suspension of the front wheels in a simple way. Such a solution may also be easily provided with brakes on the front wheels. A front axle with spring suspension and brakes on the four wheels are in several countries a prerequisite for an increased maximum permitted constructional speed of a tractor.

The invention will be described in detail in the following with reference to the figures in the accompanying drawing.

Figure 1 is a schematical side view of a power transmission arrangement in accordance with the invention.

Figure 2 shows the power transmission arrangement as viewed from above.

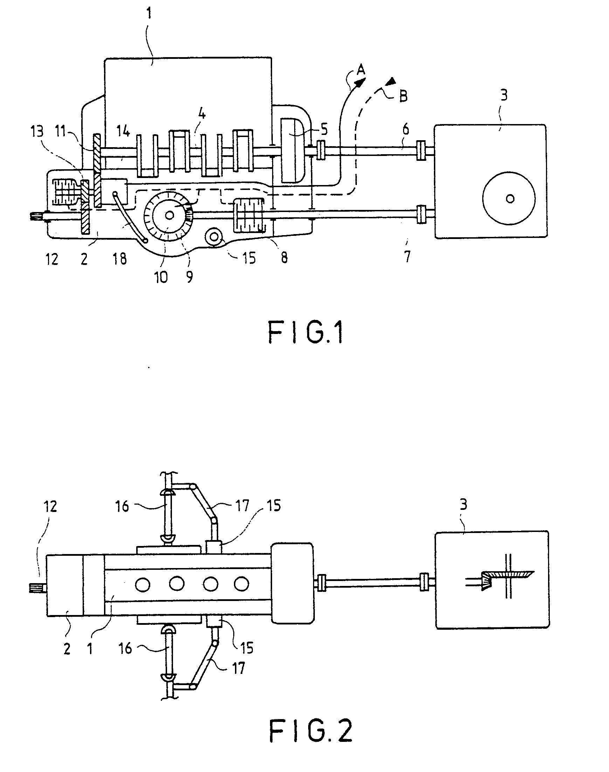

Fig. 1 is a schematical side view of the power transmission arrangement in accordance with the invention for a four-wheel-drive tractor. The disposition of the components in the tractor mainly follows the traditional line. The engine 1 of the tractor is placed in the front part of the tractor, and the gearbox 3 in the rear part of the tractor in connection with the rear axle. The power is transmitted from the crankshaft 4 of the engine through the drive clutch 5 and the clutch shaft 6, which may be, e.g., a cardan shaft, to the gearbox 3. In the embodiment in accordance with the figure, the take-off shaft for the four-wheel drive is fitted in connection with the gearbox 3, from which said take-off shaft the drive is transmitted to the front axle by means of a cardan shaft 7. The arrangement might, of course, also be such that in connection with the gearbox 3, there is a separate take-off box from which the power is transmitted by means of a cardan shaft 7 to the front axle of the tractor.

However, a speciality of the arrangement in accordance with the invention lies therein that the drive gear of the front axle with the differential gear 9 is installed inside the oil sump 2 of the engine 1 of the tractor. In accordance with the invention, the clutch 8 of the four-wheel drive, by means of which the drive is connected to the front axle of the tractor, is also installed inside the oil sump 2. In conventional solutions, the clutch of the four-wheel drive is fitted in connection with, or at the proximity of, the gearbox 3, and commonly a hydraulic multiple-plate clutch or a simple claw clutch is used as the clutch. However, in the solution in accordance with the invention, the clutch 8 of the four-wheel drive is a hydraulically operated oil-bath type disc clutch, preferably a multiple-disc clutch. In the solution in accordance with the invention, it is also advantageous to provide the differential gear 9 of the front axle with a differential lock 10, which is also fitted inside the oil sump 2. As the differential lock 10 of the front axle, preferably a hydraulically operated disc clutch of the multiple-plate-clutch type, similar to the clutch 8 of the four-wheel drive, is used.

In the power transmission arrangement in accordance with the invention, the tractor is also provided with a power take-off shaft 12 placed at the front. The power is transmitted to the shaft 12 from the front end of the crankshaft 4 of the engine by the intermediate of suitable power transmission members 11 and clutch devices 13. As is shown in Fig. 1, a gear drive 11 is used as the power transmission member, but the power may also be transmitted in some other way, e.g. by means of chain drive. The clutch 13 of the front power take-off is, in accordance with the invention, preferably a multiple-disc clutch similar to that used in the differential lock 10 and as the clutch 8 of the four-wheel drive.

In the solution in accordance with the invention, a hydraulic pump 14 is also fitted in connection with the front power take-off, which said pump 14 is used as the steering pump. The tractor in accordance with the invention is provided with hydrostatic steering, as is usually the case in modern tractors. The output of the steering pump 14, i.e. the pressure side A of the steering pump, is connected to a steering valve (not shown) connected with the steering wheel of the tractor. The steering pump 14, the front power take-off clutch 13 as well as the main part of the power transmission members 11 of the front power take-off are installed inside the oil sump 2, in the same oil space with the differential gear 9 and the differential lock 10 as well as with the clutch 8 of the four-wheel drive. The lubricant of the engine 1 is used as the drive fluid of the steering pump 14, and the same oil is also used for controlling the clutches 8 and 13 as well as the differential lock 10. The control of the operations of the clutches 8 and 13 as well as of the differential lock 10 is fitted such that the return flow B of the oil is passed to them from the steering valve via appropriate valve members, i.e. they are connected to the low-pressure circuit of the hydrostatic steering. The intake side of the pump 14 is connected to an intake pipe 18, whose inlet end is placed close to the bottom of the oil sump 2.

In the power transmission arrangement in accordance with the invention, it is advantageous if the oil sump 2 is designed as a very robust structural part, e.g. such that it, at the same time, acts as a carrying frame component of the tractor. In such a case, the differential gear 9 with its lock 10, the clutch 8 of, the four-wheel drive, the coupling and power transmission members 11,12,13 of the front power take-off, and the steering pump 14 can be readily supported, either exclusively or at least partly, on the oil sump 2. The arrangement of the front power take-off is associated with a further particular feature, namely that the steering pump 14 and the clutch 13 of the front power take-off are mounted on the same shaft, which, in the solution shown in Fig. 1, acts as the intermediate shaft of the front power take-off.

In Fig. 1, and even more clearly in Fig. 2, it is additionally shown that the steering cylinder or steering cylinders 15 of the front wheels of the tractor are also installed inside the oil sump 2. According to a preferred embodiment, the steering cylinders 15 are, moreover, supported rigidly on the oil sump 2. Since the drive gear of the front axle with the differential gear 9 is installed stationarily on the oil sump 2, the suspension of the front axle cannot be accomplished as a conventional swing axle. Thus, in the solution in accordance with the invention, for the suspension of the front wheels, it is possible to use suspension members known from the automobile technology, and the drive can be transmitted from the drive gear to the front wheels, e.g., by means of articulated shafts 16. The steering may also be arranged, in accordance with Fig. 2, by means of a separate system of rods 17 from the steering cylinder 15 to the front wheels.

In accordance with Figures 1 and 2, it is simple to provide the suspension of the front wheels with spring action in a way similar to the automobile technology. The advantages related to spring action were already described in the general part of the specification above. When solutions known from the automobile technology are used in the suspension of wheels, the angles of tilting of the front wheels can also be kept more accurately within the limits specified for them. The advantages related to this solution were also described in the specification above.

**Claims**

1. Power transmission arrangement in a tractor, in particular in a four-wheel-drive tractor, in which the power is transmitted from the tractor gearbox (3) or from a separate power take-off gearbox to the differential gear (9) of the driving front axle by means of a cardan shaft (7) or a corresponding power transmission member and in which tractor, at its front end, a power take-off shaft (12) is provided, by means of which the power can be transmitted from the engine crankshaft (4) to necessary equipment from the front end of the tractor, characterized in that the differential gear (9) of the driving front axle, with the differential lock (10), the clutch (8) for the four-wheel drive, by means of which the power can be connected from the cardan shaft (7) or a corresponding power transmission member to the differential gear (9), the clutch and power transmission devices (11, 12, 13) of the front power take-off for the main parts, and, of the steering equipment, at least the hydraulic steering pump (14) are fitted inside the oil sump (2) acting as the oil reservoir of the engine (1), whereat the said differential lock (10) and the clutch (8) for the four-wheel drive as well as the clutch (13) of the front power take-off, constituting a part of the said clutch and power transmission devices for the front power take-off, are hydraulically operating clutches and arranged to operate by means of the engine lubricant contained in the oil sump (2), which said lubricant oil is also used as the operating fluid of the steering pump (14).

2. Power transmission arrangement as claimed in claim 1, characterized in that the clutch (13) of the front power take-off, constituting a part of the clutch devices for the front power take-off, is fitted completely inside the oil sump (2).

3. Power transmission arrangement as claimed in claim 1 or 2, characterized in that the operations of the clutch (8) of the four-wheel drive, of the differential lock (10), and of the clutch, (13) of the front power take-off are arranged so as to be controlled by means of the return fluid (B) of the hydraulic control system.

4. Power transmission arrangement as claimed in any of the preceding claims, characterized in that the differential gear (9) with its lock (10), the clutch (8) of the four-wheel drive, the clutch and power transmission devices (11,12,13) for the front power take-off, and the steering pump (14) are supported partly on the oil sump (2), which is arranged so as to act as a carrying frame component of the tractor.

5. Power transmission arrangement as claimed in any of the claims 1 to 3, characterized in that the differential gear (9) with its lock (10), the clutch (8) of the four-wheel drive, the clutch and power transmission devices (11, 12, 13) for the front power take-off, and the steering pump (14) are supported exclusively on the oil sump (2), which is arranged so as to act as a carrying frame component of the tractor.

6. Power transmission arrangement as claimed in any of the preceding claims, characterized in that the clutch (13) of the front power take-off and the steering pump (14) are fitted on the same shaft.

7. Power transmission arrangement as claimed in any of the preceding claims, characterized in that the steering cylinder or steering cylinders (15) of the front wheels of the tractor are fitted inside the oil sump (2) and supported on the oil sump.

**Patentansprüche**

1. Kraftübertragungsanordnung in einem Schlepper, speziell in einem vierradgetriebenen Schlepper, bei dem die Kraft vom Schlepperschaltgetriebe (3) oder von einem getrennten Kraftabgabegetriebe zum Differentialgetriebe (9) der getriebenen Vorderachse mittels einer Kardanwelle (7) oder einem entsprechenden Kraftübertragungselement übertragen wird, und bei welchem Schlepper an seinem vorderen Ende eine Kraftabgabewelle (12) vorgesehen ist, mittels der Kraft von der Maschinenkurbelwelle (4) auf eine notwendige Einrichtung vom vorderen Ende des Schleppers übertragen werden kann, dadurch gekennzeichnet, daß das Differentialgetriebe (9) der getriebenen Vorderachse mit der Differentialsperre (10), die Kupplung (8) für den Vierradantrieb, mittels der die Kraft von der Kardanwelle (7) oder einem entsprechenden Kraftübertragungselement auf das Differentialgetriebe (9) übertragen werden kann, die Kupplungs- und Kraftübertragungseinrichtungen (11, 12, 13) der vorderen Kraftabgabeeinrichtung für die Hauptteile und wenigstens die hydraulische Steuerpumpe (14) der Steuereinrichtung innerhalb des ölsumpfes (2) angeordnet sind, der als das ölreservoir der Maschine (1) dient, wo die Differentialsperre (10) und die Kupplung (8) für den Vierradantrieb sowie die Kupplung (13) für die vordere Kraftabgabeeinrichtung, die einen Teil der genannten Kupplungs- und Kraftübertragungseinrichtungen der vorderen Kraftabgabeeinrichtung bildet, hydraulische Betätigungseinrichtungen sind und so eingerichtet sind, daß sie mittels des Maschinenschmiermittels arbeiten, das in dem ölsumpf (2) enthalten ist, welches Schmieröl auch als das Betätigungsfluid der Steuerpumpe (14) verwendet ist.

2. Kraftübertragungsanordnung nach Anspruch 1, dadurch gekennzeichnet, daß die Kupplung (13) der vorderen Kraftabgabeeinrichtung, die einen Teil der Kupplungseinrichtungen für die vordere Kraftabgabeeinrichtung bildet, vollständig innerhalb des ölsumpfes (2) angeordnet ist.

3. Kraftübertragungsanordnung nach Anspruch 1 oder 2, dadurch gekennzeichnet, daß die Betätigungen der Kupplung (8) des Vierradantriebes, der Differentialsperre (10) und der Kupplung (13) der vorderen Kraftabgabeeinrichtung so eingerichtet sind, daß sie mittels der Rückströmung (B) des hydraulischen Steuersystems gesteuert werden.

4. Kraftübertragungsanordnung nach einem der vorhergehenden Ansprüche, dadurch gekennzeichnet, daß das Differentialgetriebe (9) mit seiner Sperre (10), die Kupplung (8) des Vierradantriebes, die Kupplungs- und Kraftübertragungseinrichtungen (11, 12, 13) der vorderen Kraftabgabeeinrichtung und die Steuerpumpe (14) teilweise am ölsumpf (2) abgestützt sind, der so eingerichtet ist, daß er als tragende Rahmenkomponente des Schleppers dient.

5. Kraftübertragungsanordnung nach einem der Ansprüche 1 bis 3, dadurch gekennzeichnet, daß das Differentialgetriebe (9) mit seiner Sperre (10), die Kupplung (8) des Vierradantriebs, die Kupplungs- und Kraftübertragungseinrichtungen (11, 12, 13) für die vordere Kraftabgabeeinrichtung und die Steuerpumpe (14) ausschließlich am ölsumpf (2) abgestützt sind, der so eingerichtet ist, daß er als tragende Rahmenkomponente des Schleppers dient.

6. Kraftübertragungsanordnung nach einem der vorhergehenden Ansprüche, dadurch gekennzeichnet, daß die Kupplung (13) der vorderen Kraftabgabeeinrichtung und die Steuerpumpe (14) auf derselben Welle angebracht sind.

7. Kraftübertragungsanordnung nach einem der vorhergehenden Ansprüche, dadurch gekennzeichnet, daß der Steuerzylinder oder die Steuerzylinder (15) der Vorderräder des Schleppers innerhalb des ölsumpfes (2) angeordnet und an dem ölsumpf abgestützt sind.

**Revendications**

1. Transmission pour tracteur, plus particulièrement pour tracteur à quatre roues motrices, dans laquelle la puissance est transmise de la boîte de vitesses (3) du tracteur, ou d'une boîte de vitesses de prise de force séparée, au différentiel (9) de l'essieu avant moteur à l'aide d'un arbre à cardan (7) ou d'un organe correspondant de transmission de puissance, tandis qu'il est prévu dans ce tracteur, à son extrémité avant, un arbre de prise de force (12) à l'aide duquel la puissance peut être transmise du vilebrequin (4) du moteur aux instruments nécessaires, à partir de l'extrémité avant du tracteur, caractérisée en ce que sont logés à l'intérieur du carter d'huile (2) servant de réservoir d'huile du moteur (1): le différentiel (9) de l'essieu avant moteur, avec son blocage de différentiel (10), l'embrayage (8) de la boîte de transfert des quatre roues motrices, à l'aide duquel la puissance peut être transmise de l'arbre à cardan (7), ou d'un organe correspondant de transmission de puissance, au différentiel (9), les dispositifs d'embrayage et de transmission de puissance (11, 12, 13) de la prise de force avant, prévue pour les éléments principaux, et du dispositif de direction, à savoir au moins la pompe hydraulique de direction (14), tandis que le blocage de différentiel (10) et l'embrayage (8) prévu pour la boîte de transfert des quatre roues motrices, ainsi que l'embrayage (13) de la prise de force avant, faisant partie desdits dispositifs d'embrayage et de transmission de puissance prévus pour la prise de force avant, sont des embrayages à commande hydraulique et sont agencés de façon à travailler à l'aide du lubrifiant du moteur qui est contenu dans le carter d'huile (2), cette huile lubrifiante servant aussi de fluide de commande de la pompe de direction (14).

2. Transmission suivant la revendication 1, caractérisée en ce que l'embrayage (13) de la prise de force avant, faisant partie des dispositifs d'embrayage prévus pour cette prise de force avant, est logé totalement à l'intérieur du carter d'huile (2).

3. Transmission suivant la revendication 1 ou 2, caractérisée en ce que les commandes de l'embrayage (8) de la boîte de transfert des quatre roues motrices, du blocage de différentiel (10) et de l'embrayage (13) de la prise de force avant sont agencées de façon à être effectuées à l'aide du fluide de retour B du système de commande hydraulique.

4. Transmission suivant l'une quelconque des revendications précédentes, caractérisée en ce que le différentiel (9), avec son blocage (10), l'embrayage (8) de la boîte de transfert des quatre roues motrices, les dispositifs d'embrayage et de transmission de puissance (11, 12, 13) prévus pour la prise de force avant, et la pompe de direction (14) sont portés partiellement par le carter d'huile (2), qui est agencé de façon à servir d'élément du chassis porteur du tracteur.

5. Transmission suivant l'une quelconque des revendications 1 à 3, caractérisée en ce que le différentiel (9), avec son blocage (10), l'embrayage (8) de la boîte de transfert des quatre roues motrices, les dispositifs d'embrayage et de transmission de puissance (11, 12, 13) prévus pour la prise de force avant, et la pompe de direction (14) sont portés exclusivement par le carter d'huile (2), qui est agencé pour, servir d'élément du chassis porteur du tracteur.

6. Transmission suivant l'une quelconque des revendications précédentes, caractérisée en ce que l'embrayage (13) de la prise de force avant et la pompe de direction (14) sont montés sur le même arbre.

7. Transmission suivant l'une quelconque des revendications précédentes, caractérisée en ce que le ou les cylindres de direction (15) des roues avant du tracteur sont montés à l'intérieur du carter d'huile (2) et portés par ce carter d'huile.

FIG.1

FIG.2